# FASCICULE DE BREVET EUROPEEN

(11) **EP 0 410 896 B1**
(45) Date de publication et mention de la délivrance du brevet: **20.04.1994**
(21) Numéro de dépôt: 90402175.5
(22) Date de dépôt: 27.07.1990
(51) Int. Cl.: F16F 13/00

(54) **Perfectionnements aux dispositifs amortisseurs de vibrations**
Verbesserungen an hydraulischen Schwingungsdämpfern
Improvements on hydraulic vibration dampers

(30) Priorité: 28.07.1989 FR 8910242
(43) Date de publication de la demande: 30.01.1991
(73) Titulaire: PAULSTRA GMBH, D-68060 Mannheim (DE)
(72) Inventeur: Spaltofski, Ralf, D-6700 Ludwigshafen (DE)
(74) Mandataire: Burbaud, Eric

(56) Documents cités:
- EP-A- 0 118 887
- EP-A- 0 134 839
- EP-A- 0 256 762
- CH-A- 577 126
- DE-A- 3 005 983
- DE-U- 8 717 411
- FR-A- 1 505 877
- FR-A- 2 549 558
- GB-A- 2 055 172

## Description

L'invention est relative aux dispositifs à interposer aux fins de support et guidage entre deux ensembles rigides et agencés de façon à amortir la transmission des vibrations de l'un de ces ensembles à l'autre.

L'application préférée, mais non exclusive, de ces dispositifs est le montage des moteurs à combustion interne des véhicules sur leur châssis.

L'invention vise plus particulièrement, parmi les dispositifs considérés, ceux qui comprennent, deux éléments rigides solidarisables respectivement avec les deux ensembles et, interposés tous deux, coaxialement l'un par rapport à l'autre, entre ces deux éléments rigides, d'une part, un ressort principal et, d'autre part, un système amortisseur comprenant en série un boîtier rigide rempli d'un liquide visqueux, un piston terminant un pied rigide et noyé dans ledit liquide, et un ressort auxiliaire.

Dans des modes de réalisation qui ont été proposés pour les dispositifs amortisseurs du genre indiqué, par exemple dans le brevet FRANCE n° 2 549 558, le ressort auxiliaire est disposé entre le piston et le pied qui le porte.

Ces dispositifs donnent satisfaction dans de nombreux cas.

L'invention a pour but de les améliorer encore, en particulier au plan de l'efficacité, notamment du filtrage acoustique, et de la longévité.

A cet effet, les dispositifs amortisseurs du genre en question sont essentiellement caractérisés selon l'invention en ce que le boîtier est indépendant du ressort principal, en ce que le ressort auxiliaire est interposé entre le boîtier et l'élément rigide auquel est relié ce boîtier et en ce que le pied est relié au bord d'un orifice du boîtier, qu'il traverse, par un soufflet étanche et déformable.

Dans des modes de réalisation préférés, on a recours en outre à l'une et/ou à l'autre des dispositions suivantes :
- une portion de la paroi délimitant le boîtier est constituée par une membrane étanche et déformable associée à des moyens pour limiter à une valeur inférieure à 1 mm l'amplitude des débattements vibratoires de sa portion la plus mobile, selon la direction perpendiculaire à la surface moyenne de cette portion,
- la paroi, du boîtier, opposée à celle traversée par le pied est évidée par un second orifice et le bord de cet orifice est relié au piston par un second soufflet étanche et déformable,
- les deux soufflets ci-dessus sont constitués par deux pots en élastomère dont les fonds sont fixés de façon étanche sur l'extrémité, du pied, portant le piston et dont les bords sont prolongés par des rebords extérieurs eux-mêmes reliés de façon étanche aux bords des orifices du boîtier,
- les deux pots selon l'alinéa précédent sont venus de moulage avec des bourrelets s'étendant selon des lignes fermées constituant le ressort auxiliaire,
- les deux pots ci-dessus sont identiques,
- la portion de la paroi du boîtier qui entoure le piston est élargie au niveau où se trouve la zone axiale médiane de ce piston au repos et va en se rétrécissant si l'on s'écarte de part et d'autre de ce niveau selon la direction des débattements du piston,
- le dispositif selon l'alinéa précédent est de révolution autour d'un axe et la portion, de la paroi latérale annulaire du boîtier, qui entoure le piston, présente la forme de deux troncs de cône juxtaposés tête-bêche selon leurs grandes bases,
- le piston est un disque monté de façon axialement flottante sur le pied rigide,
- le ressort auxiliaire est essentiellement constitué par une rondelle en élastomère travaillant au cisaillement.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1, de ce dessin, montre très schématiquement un dispositif amortisseur de vibrations établi selon l'invention.

La figure 2 montre en coupe axiale un tel amortisseur.

Les figures 3 et 4 montrent également en coupe axiale des détails de variantes d'un tel amortisseur encore établies conformément à l'invention.

La figure 5 montre encore en coupe axiale une autre variante d'amortisseur conforme à l'invention.

Les amortisseurs ici considérés à titre d'exemple sont destinés à être interposés entre le châssis d'un véhicule et le moteur à combustion interne de ce véhicule, aux fins de support du moteur par le châssis et d'amortissement et/ou de filtration des oscillations et vibrations susceptibles d'être transmises entre ces deux ensembles.

D'une façon connue en soi, un tel amortisseur comprend :
- deux éléments rigides 1, 2 susceptibles d'être fixés rigidement sur les deux ensembles à réunir, savoir respectivement sur la masse supportée (moteur) et sur le support (châssis),
- un ressort tronconique ou cylindrique 3 d'axe vertical constitué en matériau élastomère, offrant une bonne résistance à la compression axiale et directement interposé entre les deux éléments 1 et 2,
- un pied ou tige rigide 4 fixé sur l'élément supérieur 1, traversant axialement le ressort 3 de part en part et faisant saillie inférieurement au-dessous de ce ressort,
- un disque ou piston rigide 5 vissé à l'extrémité inférieure du pied 4 par une vis 6,
- un boîtier ou "capsule" 7 à paroi rigide lié à l'élément inférieur 2, enveloppant avec jeu le disque 5,
- et un liquide amortisseur L remplissant l'intérieur de la capsule 7.

De plus, et conformément à l'invention, on a recours à au moins l'ensemble des dispositions suivantes :
- la capsule 7 est indépendante du ressort 3,
- la capsule 7 est reliée à l'élément inférieur 2 par l'intermédiaire d'un second ressort annulaire 9,
- le pied 4 est relié au bord d'un orifice de la capsule 7, qu'il traverse, par un soufflet étanche et déformable 8 n'opposant qu'une faible résistance à la déformation.

En outre, de préférence, on constitue une portion de la paroi de la capsule 7 par une membrane plane déformable 10 dont le pourtour est relié de façon étanche au restant de ladite paroi, des moyens étant prévus pour limiter l'amplitude des débattements de cette membrane selon la direction perpendiculaire à son plan moyen à une valeur au plus égale à 1 mm.

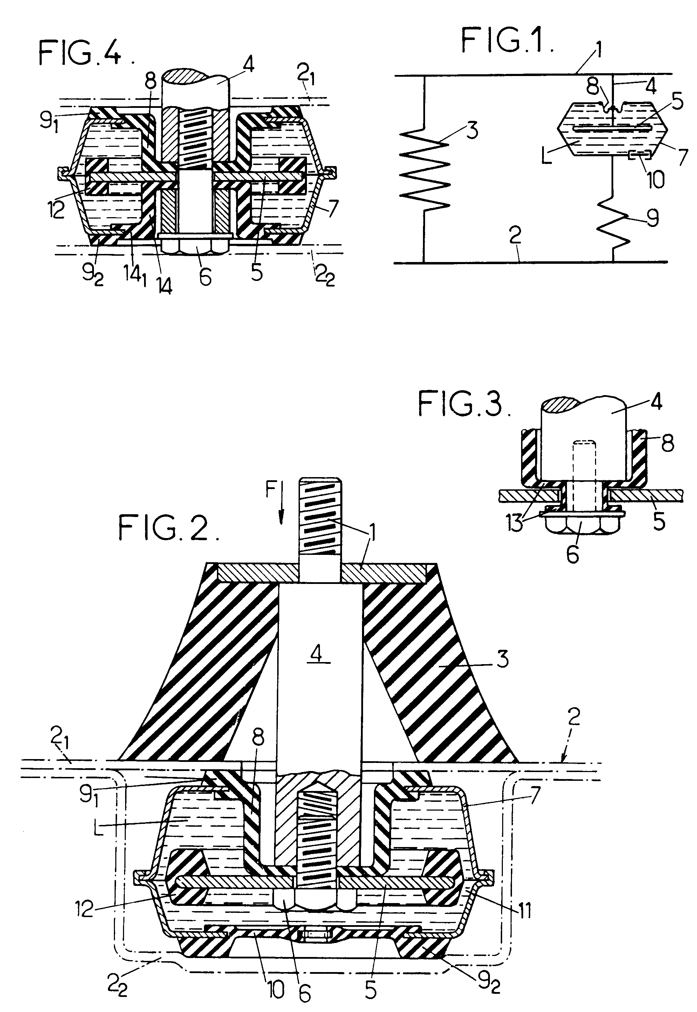

Dans le mode de réalisation représenté sur la figure 2, le ressort auxiliaire 9 est composé par deux anneaux en matériau élastomère 9₁ et 9₂ :
- le premier de ces anneaux 9₁ est interposé verticalement entre le dessus de la capsule 7 et un morceau de tôle 2₁ constitutif de l'élément 2 et sur lequel repose le ressort 3 ci-dessus,
- quant à l'autre anneau 9₂, il est interposé verticalement entre le dessous de la capsule 7 et un autre morceau de tôle 2₂ formant cuvette et rapporté sur l'autre 2₁ par soudage.

Comme bien visible sur la figure 2, l'anneau supérieur 9₁ est avantageusement venu de moulage avec le soufflet 8 et l'anneau inférieur 9₂ est avantageusement venu de moulage avec la membrane 10.

Dans cette réalisation en effet, ladite membrane 10 est constituée par une pastille circulaire en caoutchouc obturant un trou circulaire pratiqué dans le fond de la capsule 7 coaxialement à l'ensemble.

Les moyens pour limiter les débattements de cette membrane 10 peuvent être, d'une façon connue en soi, constitués par des grilles rigides disposées de part et d'autre de ladite membrane et solidaires de la capsule 7.

Dans le mode de réalisation illustré, on a supposé que ces moyens étaient constitués par une toile inextensible (non représentée) incorporée dans la membrane.

Le fonctionnement du dispositif amortisseur ci-dessus décrit est le suivant.

Toute sollicitation de l'élément supporté 1 par rapport à l'élément de support 2 vers le bas, c'est-à-dire dans le sens de la flèche F sur la figure 2, à partir de la position de repos illustrée sur cette figure, se traduit par un écrasement élastique des ressorts 3 et 9₂ et par un déplacement vers le bas du disque 5 à l'intérieur de la masse liquide L occupant la capsule 7.

Les écrasements élastiques signalés sont générateurs d'un effort de rappel alors que la résistance opposée par le liquide L au déplacement du disque ou "piston" 5, résistance qui se traduit par une circulation relative du liquide vers le haut dans le passage annulaire étranglé 11 réservé entre le piston 5 et la paroi de la capsule 7 qui l'entoure, a pour effet d'amortir fortement ce déplacement.

Lors du rappel subséquent, le retour du piston 5 vers sa position initiale se traduit par un refoulement du liquide L en sens inverse du précédent, c'est-à-dire vers le bas dans le passage étranglé 11.

Ce demi-cycle est suivi d'un autre demi-cycle en sens inverse après dépassement par le piston de sa position neutre correspondant au repos et ainsi de suite.

L'expérience montre que le recours aux dispositions ci-dessus décrites confère à l'amortisseur obtenu des qualités excellentes, en particulier en ce qui concerne la filtration acoustique et la longévité.

On peut penser que cet excellent résultat est dû au fait :
- que la localisation du ressort auxiliaire 9 entre la capsule 7 et l'élément rigide 2 fixé sur le support plutôt qu'entre le disque 5 et le pied 4 qui le porte, pied fixé sur la masse supportée, permet de localiser l'essentiel de l'action due à ce ressort entre la masse liquide L mise en vibration et l'élément de support 2 plutôt qu'entre l'élément supporté 1 et ladite masse liquide, ce qui aurait réduit l'importance de la mise en vibration de cette masse liquide et donc l'amortissement dû à celle-ci,
- et que la présence de la membrane, s'il en est prévu une, permet d'absorber les surpressions instantanées susceptibles de naître dans le liquide amortisseur au cours du fonctionnement du dispositif.

L'examen de la figure 2 fait apparaître d'autres dispositions que celles plus spécialement décrites ci-dessus.

En particulier, la capsule rigide 7 est délimitée par deux cuvettes évasées en troncs de cônes et raccordées l'une à l'autre tête-bêche au niveau de leurs grandes bases.

Ce niveau est celui N où se trouve la zone axiale médiane du disque 5 au repos.

En d'autres termes, la section droite qui est disponible pour la circulation du liquide L autour de ce disque est maximum lorsque ce dernier se trouve au voisinage de sa position de repos et décroît au contraire lorsque ce disque s'écarte de ladite position.

On obtient ainsi un réglage automatique de la raideur du dispositif puisque, plus l'amplitude des débattements axiaux imposés au disque 5 à l'intérieur du liquide L est grande, plus grande est la résistance opposée par ce liquide aux débattements de ce disque, vu la réduction concomitante de la section du passage étranglé 11 offert audit liquide.

D'autres constructions pourraient être adoptées sans sortir du cadre de l'invention pour réduire automatiquement la section du passage étranglé offert au liquide L entre le disque 5 et la capsule 7 qui l'enveloppe lorsque l'amplitude du débattement axial relatif de ce disque par rapport à cette capsule croît.

En particulier la paroi de la capsule 7 pourrait être cylindrique et évidée par des gorges allongées verticalement et dont la section horizontale serait d'autant plus grande que le point considéré de la gorge serait plus proche du niveau N défini ci-dessus.

On voit encore sur la figure 2 que le disque 5 est entouré par un bourrelet 12 en matériau élastomère, ce qui présente plusieurs avantages :
- la présence de ce bourrelet permet d'augmenter la dimension axiale du passage étrangé 11,
- elle permet d'amortir les chocs qui pourraient être dus au contact direct entre le bord du disque 5 et la portion en regard de la paroi de la capsule 7.

Comme bien visible sur la figure 2, on donne avantageusement aux faces, du bourrelet 12, qui se trouvent tansversalement en regard de la paroi de la capsule 7 des orientations sensiblement parallèles à cette paroi lorsque le piston 5 se trouve en sa position de repos illustrée.

En d'autres termes, la section transversale du passage étranglé 11 est sensiblement la même sur toute la longueur de ce passage pour ladite position du repos du piston 5.

La figure 3 montre une variante selon laquelle le disque 5, au lieu d'être vissé rigidement contre l'extrémité du pied 4, serait monté de façon axialement flottante sur la base de ce pied.

Des bagues 13 en matériau élastomère sont alors interposées entre les faces en regard du disque 5 et de son support afin de supprimer les bruits dus aux chocs mutuels des pièces métalliques.

Ces bagues 13 peuvent être rapportées sur l'une et/ou l'autre des pièces concernées et peuvent être constituées par une portion du soufflet 8, comme illustré.

Dans une variante illustrée sur la figure 4, la membrane plate 10 ci-dessus est remplacée par une membrane 14 en forme de pot renversé dont le fond est fixé de façon étanche sur la base du pied 4 par la vis 6 et dont le bord est prolongé par un rebord extérieur 14₁ fixé de façon étanche, tout comme le bord de la membrane plate précédente 10, contre le bord d'une ouverture évidée dans le fond de a capsule 7 : c'est alors ce rebord 14₁ qui est prolongé par l'anneau 9₂ ci-dessus.

Dans cette variante, le soufflet 8 peut être formé par un pot tout à fait identique audit pot 14, ce qui conduit à une construction symétrique et simplifie beaucoup la fabrication.

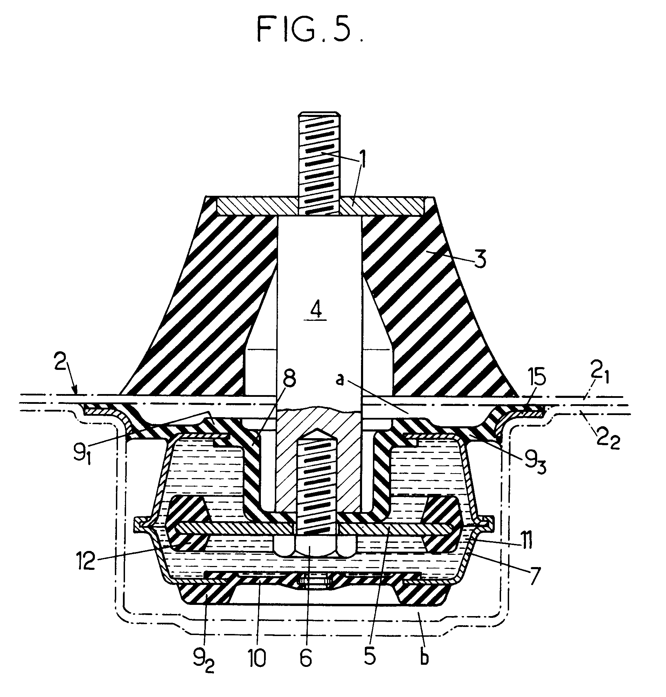

Dans une autre variante illustrée sur la figure 5, le ressort auxiliaire n'est plus constitué, comme dans les précédents modes de réalisation, par deux bourrelets annulaires 9₁ et 9₂ travaillant à la compression et interposés axialement entre le boîtier 7 et des tôles 2₁, 2₂ constitutives de l'élément rigide 2, bourrelets qui peuvent présenter un profil "étagé" pour assurer une réponse non linéaire de l'amortissement en fonction des amplitudes des oscillations à amortir.

Ici, le boîtier 7 est séparé axialement des deux tôles 2₁, 2₂ par des intervalles a et b et il est relié à l'élément rigide 2 par une rondelle en élastomère 9₃ de faible raideur travaillant au cisaillement et à la flexion.

Les bourrelets 9₁ et 9₂ sont encore prévus ici, mais ils servent uniquement à rendre progressives les butées de fin de course des débattements du boîtier par rapport à l'élément rigide 2.

La rondelle 9₃ peut être interposée entre la zone axiale médiane, de diamètre maximum, du boîtier 7 et une paroi cylindrique en regard qui l'entoure, faisant partie de l'élément rigide 2.

Dans le mode de réalisation illustré, cette rondelle 9₃ est venue de moulage avec le soufflet 8 et l'anneau 9₁ et prolonge ceux-ci vers l'extérieur, son bord périphérique étant serti entre deux plages en regard comprises respectivement par les deux tôles 2₁ et 2₂, déformées ou non, constitutives de l'élément rigide 2, avec éventuellement interposition d'une virole métallique 15 rapportée contre ledit bord.

En suite de quoi, et quel que soit le mode de réalisation adopté, on obtient finalement un dispositif amortisseur de vibrations dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Dispositif amortisseur à interposer entre deux ensembles rigides, comprenant deux éléments rigides (1,2) solidarisables respectivement avec les deux ensembles et, interposés tous deux, coaxialement l'un par rapport à l'autre entre ces deux éléments rigides, d'une part, un ressort principal (3) et, d'autre part, un système amortisseur comprenant en série un boîtier rigide (7) rempli d'un liquide visqueux (L), un piston (5) terminant un pied rigide (4) et noyé dans ledit liquide, et un ressort auxiliaire (9), caractérisé en ce que le boîtier (7) est indépendant du ressort principal (3), en ce que le ressort auxiliaire (9) est interposé entre le boîtier et l'élément rigide (2) auquel est relié ce boîtier et en ce que le pied (4) est relié au bord d'un orifice du boîtier, qu'il traverse, par un soufflet étanche et déformable (8).

2. Dispositif amortisseur selon la revendication 1, caractérisé en ce qu'une portion de la paroi délimitant le boîtier (7) est constituée par une membrane étanche et déformable (10) associée à des moyens pour limiter à une valeur inférieure à 1 mm l'amplitude des débattements vibratoires de sa portion la plus mobile, selon la direction perpendiculaire à la surface moyenne de cette portion.

3. Dispositif amortisseur selon l'une quelconque des précédentes revendications, caractérisé en ce que la paroi, du boîtier (7), opposée à celle traversée par le pied (4) est évidée par un second orifice et en ce que le bord de cet orifice est relié au piston (5) par un second soufflet (14) étanche et déformable.

4. Dispositif amortisseur selon la revendication 3, caractérisé en ce que les deux soufflets (8, 14) sont constitués par deux pots en élastomère dont les fonds sont fixés de façon étanche sur l'extrémité, du pied (4), portant le piston (5) et dont les bords sont prolongés par des rebords extérieurs eux-mêmes reliés de façon étanche aux bords des orifices du boîtier.

5. Dispositif selon la revendication 4, caractérisé en ce que les deux pots (8,14) sont venus de moulage avec des bourrelets s'étendant selon des lignes fermées (9₁,9₂) constituant le ressort auxiliaire (9).

6. Dispositif selon l'une quelconque des revendications 4 et 5, caractérisé en ce que les deux pots (8,14) sont identiques.

7. Dispositif selon l'une quelconque des précédentes revendications, caractérisé en ce que la portion de la paroi du boîtier (7) qui entoure le piston (3) est élargie au niveau où se trouve la zone axiale médiane de ce piston au repos et va en se rétrécissant si l'on s'écarte de part et d'autre de ce niveau selon la direction des débattements du piston.

8. Dispositif selon la revendication 7, caractérisé en ce qu'il est de révolution autour d'un axe et en ce que la portion, de la paroi latérale annulaire du boîtier (7), qui entoure le piston, présente la forme de deux troncs de cône juxtaposés tête-bêche selon leurs grandes bases.

9. Dispositif selon l'une quelconque des précédentes revendications, caractérisé en ce que le piston (3) est un disque monté de façon axialement flottante sur le pied rigide (4).

10. Dispositif selon l'une quelconque des précédentes revendications, caractérisé en ce que le ressort auxiliaire est essentiellement constitué par une rondelle en élastomère travaillant au cisaillement (9₃).

## Patentansprüche

1. Dämpfungseinrichtung zum Einbau zwischen zwei starren Bauteilen, die aus zwei starren Elementen (1, 2) besteht, die an dem einen bzw. dem anderen Bauteil anbringbar sind, und folgende Teile enthält, die beide koaxial zueinander zwischen den beiden starren Elementen eingefügt sind: einerseits eine Hauptfederung (3) und andererseits ein Dämpfungssystem, das hintereinander einen starren Behälter (7), der mit einer viskosen Flüssigkeit (L) gefüllt ist, einen Kolben (5), der am Ende eines starren Fußstückes (4) sitzt und von der Flüssigkeit umgeben ist, und eine zusätzliche Federung (9) enthält, dadurch gekennzeichnet, daß der Behälter (7) unabhängig von der Hauptfederung (3) ist, daß die zusätzliche Federung (9) zwischen dem Behälter und dem starren Element (2) eingefügt ist, mit dem der Behälter verbunden ist, und daß das Fußstück (4) mit dem Rand einer Öffnung des Behälters, durch die es durchtritt, durch einen dichten und nachgiebigen Balg (8) verbunden ist.

2. Vorrichtung nach Anspruch 1, dadurch gekennzeichnet, daß ein Abschnitt der Wandung, die den Behälter (7) begrenzt, aus einer dichten und nachgiebigen Membran (10) besteht, die mit Einrichtungen verbunden ist, die die Amplitude der vibrierenden Ausfederung seines beweglichsten Abschnittes in einer Richtung, die senkrecht zur mittleren Oberfläche dieses Abschnittes verläuft, auf einen unter 1 mm liegenden Wert begrenzt.

3. Vorrichtung nach einem der vorhergehenden Ansprüche, dadurch gekennzeichnet, daß die Wandung des Behälters (7), die der gegenüberliegt, durch die das Fußstück (4) geführt ist, mit einer zweiten Öffnung versehen ist und daß der Rand dieser Öffnung mit dem Kolben (5) über einen zweiten dichten und deformierbaren Balg (14) verbunden ist.

4. Vorrichtung nach Anspruch 3, dadurch gekennzeichnet, daß die beiden Bälge (8, 14) aus zwei Töpfen aus elastomerem Material bestehen, deren Böden dicht an dem Ende des Fußstückes (4) angebracht sind, das den Kolben (5) trägt, und deren Ränder durch äußere umgebogene Abschnitte verlängert sind, die ihrerseits dicht mit den Rändern der Öffnungen des Behälters verbunden sind.

5. Vorrichtung nach Anspruch 4, dadurch gekennzeichnet, daß die beiden Töpfe (8, 14) aus einem Stück mit Wülsten (9₁, 9₂) durch Verformung hergestellt sind, die ringförmig ausgebildet sind und die zusätzliche Federung (9) bilden.

6. Vorrichtung nach einem der vorhergehenden Ansprüche 4 und 5, dadurch gekennzeichnet, daß die beiden Töpfe (8, 14) identisch ausgebildet sind.

7. Vorrichtung nach einem der vorhergehenden Ansprüche, dadurch gekennzeichnet, daß der Abschnitt der Wandung des Behälters (7), der den Kolben (5) umgibt, in dem Höhenbereich, in dem sich im Ruhezustand die mittlere axiale Zone des Kolbens befindet, vergrößert ist und sich verengt, wenn man sich von diesem Bereich auf beiden Seiten in Richtung der Schwingungen des Kolbens entfernt.

8. Vorrichtung nach Anspruch 7, dadurch gekennzeichnet, daß sie als Umdrehungskörper um eine Achse ausgebildet ist und daß der Abschnitt der seitlichen ringförmigen Wandung des Behälters (7), der den Kolben umgibt, die Form von zwei Kegelstümpfen hat, die mit ihren großen Grundflächen aneinanderliegen.

9. Vorrichtung nach einem der vorhergehenden Ansprüche, dadurch gekennzeichnet, daß der Kolben (5) eine Scheibe ist, die axial frei endend an dem starrem Fußstück (4) befestigt ist.

10. Vorrichtung nach einem der vorhergehenden Ansprüche, dadurch gekennzeichnet, daß die zusätzliche Federung im wesentlichen aus einer Scheibe (9₃) aus elastomerem Material besteht, die auf Scherung beansprucht wird.

## Claims

1. Damping device to be inserted between two rigid assemblies, comprising two rigid elements (1, 2) which can be fixed respectively to the two assemblies and, both interposed, coaxially in relation to each other, between these two rigid elements, on the one hand a main spring (3) and, on the other hand, a damping system comprising in series a rigid case (7) filled with a viscous liquid (L), a piston (5) ending a rigid foot (4) and immersed in said liquid and an auxiliary spring (9), characterized in that the case (7) is independent of the main spring (3), in that the auxiliary spring (9) is inserted between the case and the rigid element (2) to which this case is connected and in that the foot (4) is connected to the edge of an orifice of the case, which it passes through, by a sealed and deformable bellows (8).

2. Damping device according to claim 1, characterized in that a portion of the wall defining the case (7) is formed by a sealed and deformable membrane (10) associated with means for limiting the amplitude of the vibratory movements of its most mobile portion to a value less than 1 mm, in a direction perpendicular to the mean surface of this portion.

3. Damping device according to any one of the preceding claims, characterized in that the wall of the case (7) opposite that through which the foot (4) passes is formed with a second orifice and in that the edge of this orifice is connected to the piston (5) by a second sealed and deformable bellows (14).

4. Damping device according to claim 3, characterized in that the two bellows (8, 14) are formed by two elastomer pots whose bottoms are sealingly fixed to the end of the foot (4) carrying the piston (5) and whose edges are extended by external flanges themselves sealingly connected to the edges of the orifices of the case.

5. Damping device according to claim 4, characterized in that the two pots (8, 14) are integrally moulded with pads extending along closed lines (9₁, 9₂) forming the auxiliary spring (9).

6. Damping device according to any one of the claims 4 and 5, characterized in that the two above pots (8, 14) are identical.

7. Damping device according to any one of the preceding claims, characterized in that the portion of the wall of the case (7) which surrounds the piston (3) is widened at the level where the median axial zone of this piston is located at rest and narrows on each side away from this level in the direction of the movements of the piston.

8. Damping device according to claim 7, characterized in that it is of revolution about an axis and in that the portion of the annular side wall of the case (7), which surrounds the piston, has the form of two truncated cones juxtaposed head to tail by their large bases.

9. Damping device according to any one of the preceding claims, characterized in that the piston (3) is a disc mounted axially floating on the rigid foot (4).

10. Damping device according to any one of the preceding claims, characterized in that the auxiliary spring is essentially formed by an elastomer material washer working under shearing (9₃).
